# EUROPÄISCHE PATENTSCHRIFT

(11) **EP 3 947 228 B1**
(45) Veröffentlichungstag und Bekanntmachung des Hinweises auf die Patenterteilung: **09.11.2022**
(21) Anmeldenummer: 20719342.6
(22) Anmeldetag: 01.04.2020
(51) Int. Cl.: B65H 75/44, H02G 11/02

(54) **KOMPAKTE WICKELVORRICHTUNG FÜR EINE FLEXIBLE LEITUNG**
COMPACT WINDING DEVICE FOR A FLEXIBLE LINE
DISPOSITIF D'ENROULEMENT COMPACT POUR UNE CONDUITE FLEXIBLE

(30) Priorität: 01.04.2019 DE 202019101862 U
(43) Veröffentlichungstag der Anmeldung: 09.02.2022
(73) Patentinhaber: Igus GmbH, 51147 Köln (DE)
(72) Erfinder: THEISS, Georg, 50678 Köln (DE)
(74) Vertreter: Lippert Stachow Patentanwälte Rechtsanwälte
(86) Internationale Anmeldenummer: PCT/EP2020/059242
(87) Internationale Veröffentlichungsnummer: WO 2020/201348

(56) Entgegenhaltungen:
- EP-A1- 2 535 303
- EP-A2- 2 526 599
- WO-A1-80/00643
- US-A- 3 061 234
- US-A- 3 539 123

## Beschreibung

Die Erfindung betrifft eine Wickelvorrichtung zum Auf- und Abspulen einer flexiblen Leitung, wie eines Kabels, eines Schlauchs oder dergleichen, insbesondere für eine anwendungsfertig vorkonfektionierte, z.B. mit Steckverbindern, oder bereits an ein Gerät bzw. eine Anlage angeschlossene Leitung.

Die Erfindung betrifft insbesondere eine sochle Wickelvorrichtung mit einem ortsfest montierbaren Gestell und einer gegenüber diesem drehbaren Spultrommel, auf deren Außenseite die gewünschte Leitung wahlweise auf- oder abspulbar bzw. auf- oder abwickelbar ist, und welche eine innere Drehführung zur unterbrechungsfreien Führung der Leitung von einem bezüglich des Gestells festen Festpunkts zu einem mit der Spultrommel drehenden Drehpunkt geführt ist.

Unterbrechungsfrei in Bezug auf die Leitung bedeutet vorliegend, dass zum Übergang vom feststehenden Teil auf den drehenden Teil nicht - wie allgemein üblich - ein Schleifring für eine elektrische Leitung, eine Drehkopplung für einen Schlauch, oder dgl. als Schnittstelle zum relativdrehbaren Teil der Wickelvorrichtung vorgesehen werden muss.

Eine derartige, gattungsgemäße Wickelvorrichtung nach dem Oberbegriff aus Anspruch 1 ist z.B. bereits aus dem Patent US3,061,234A vorbekannt. Als innere Drehführung zur unterbrechungsfreien Führung der Leitung werden hierbei eine innere Trommelanordnung mit zwei relativdrehbaren inneren Hilfstrommeln und dazwischen einer Umlenkscheibe vorgeschlagen. Mit dieser Anordnung wird ein Leitungsverlauf vorgegeben mit zwei gegensinnigen Wicklungen, nämlich einer ersten Wickelrichtung um die Drehachse auf der ersten inneren Trommel, einer drehbaren Umlenkung durch die Umlenkscheibe sowie einer zweiten entgegengesetzten Wickelrichtung auf der zweiten inneren Trommel.

Diese Wickelvorrichtung vermeidet die Notwendigkeit für Schleifringe, Drehkupplungen oder dgl., ist jedoch konstruktiv recht aufwendig. Zudem ermöglicht diese Lösung nicht ohne weiteres das nachträgliche Montieren einer Leitung. Eine ähnliche, gattungsgemäße Wickelvorrichtung, im Aufbau jedoch noch komplexere Lösung ist aus dem Patent EP 0 895 505 B1 bekannt.

Eine Weiterentwicklung hinsichtlich der Drehführung zur unterbrechungsfreien Führung einer Leitung von einem Festpunkt zu einem Drehpunkt wurde bereits mit der Wickelvorrichtung gemäß dem Patent DE 10 2012 110 967 B4 der Anmelderin vorgeschlagen. Diese Lösung verwendet eine Alternative zur vorbekannten unterbrechungsfreien Drehführung dar, sie baut jedoch nicht besonders kompakt, insbesondere in Axialrichtung.

Insbesondere bei sicherheitskritischen Anwendungen, wie z.B. bereits verkabelten Steuerungsgeräten in der Automatisierungstechnik oder Anlagensteuerung, ist ein nachträglicher Eingriff in die bereits anwendungsfertig angeschlossene Leitung typischerweise unerwünscht. Die vorgenannten Lösungen erlauben keine in diesem Sinne einfache Nachrüstung einer Wickelvorrichtung zum Auf- und Abspulen einer bereits betriebsfertigen Leitung.

Es besteht demnach der Wunsch auch eine an beiden seiten bereits betriebsfertig konfektionierte bzw. angeschlossene Leitung nachträglich mit einer Wickelvorrichtung auszurüsten.

Eine erste Aufgabe der vorliegenden Erfindung ist es mithin, eine gattungsgemäße Wickelvorrichtung dahingehend weiterzuentwickeln, dass es bei kompakter Bauweise ermöglicht wird nachträglich eine bereits betriebsfertig konfektionierte bzw. angeschlossene Leitung zwecks wahlweisem Auf- und Abspulen mit der Wickelvorrichtung nachzurüsten. Dies soll insbesondere mit verhältnismäßig geringem Montageaufwand bzw. ohne spezielle Qualifikation dem Endnutzer vor Ort ermöglicht werden.

Erfindungsgemäß wird dies bei einer Wickelvorrichtung nach dem Anspruch 1 zunächst bereits dadurch erreicht, dass die Spultrommel an einem ersten Stirnende mindestens eine erste Aussparung aufweist, welche bezüglich der Drehachse stirnseitig offen nach außen mündet insbesondere allgemein in Axialrichtung, z.B. parallel oder schräg zur Drehachse. Das erste Stirnende entspricht dabei derjenigen Seite, an welcher auch der Drehpunkt der inneren Drehführung vorgesehen ist.

Erfindungsgemäß ist weiterhin am gegenüberliegenden zweiten Stirnende der Spultrommel ein mit dem Gestell bezüglich der Drehachse drehfest verbundenes Halteteil vorgesehen, das seinerseits mindestens eine zweite Aussparung aufweist, welche wiederum nach außen offen mündet, jedoch allgemein in einer radialen Ebene senkrecht zur Drehachse betrachtet.

Durch das erfindungsgemäße Vorsehen der beidseitigen Aussparungen, die sozusagen als Durchführöffnungen für eine endseitig bereits angeschlossene und/oder z.B. mit Steckverbindern vorkonfektionierte Leitung dienen, wird insbesondere ermöglicht, dass die anwendungsabhängig zu spulende bzw. zu verstauende Leitung von der Außenseite durch die erste Aussparung, insbesondere in Radialrichtung in den Innenraum bzw. die Spultrommel hinein, zum Drehpunkt der Drehführung, durch die innere Drehführung hindurch und von deren Festpunkt ausgehend, insbesondere axial aus dem Innenraum bzw. der Spultrommel heraus, und durch die zweite Aussparung verlegt werden kann. Selbstverständlich kann die Leitung zur Installation bzw. Nachrüstung vollkommen gleichwertig auch in umgekehrter Richtung ausgehend von der zweiten Aussparung durch die Drehführung über die erste Aussparung auf den Mantel verlegt bzw. an der Wickelvorrichtung angebracht werden, die Verlegerichtung bzw. Reihenfolge ist insoweit unerheblich. Es können ggf. auch an einer Seite oder an beiden Seiten jeweils mehrere entsprechende Aussparungen vorgesehen sein um die Leitung je nach zu spulender Länge wahlweise durchzuführen.

Die beiden Aussparungen bilden nach Außen offene Zugänge zum Innenraum bzw. aus diesem heraus d.h. erlauben demnach auf relativ einfache Weise einen vorhandenen Abschnitt der Leitung in den Innenraum bzw. die dortige Drehführung einzubringen und aus diesem wieder herauszuführen, ohne dass die Leitung dazu aufgetrennt und wieder verbunden werden müsste - anders als bei bekannten Wickelvorrichtungen, wie z.B. in US 3'061'234 A oder EP 0 895 505 B1.

Die beiden nach außen öffnenden Aussparungen bzw. Mündungen können grundsätzlich beliebige Geometrie haben, sie sollen lediglich einen ausreichenden freien Querschnitt für die anwendungsabhängig gewählte Leitung aufweisen. Auf die Größe von angeschlossenen Steckvorrichtungen oder Geräten, die endseitig bereits an der Leitung angeschlossen sind, kommt es dabei grundsätzlich nicht an, da ein beliebiger Teilbereich ausreichender Länge der Leitung eingelegt werden. Auch hinsichtlich des Typs oder des Leitungsquerschnitts der Leitung bestehen grundsätzlich keine Beschränkungen, wobei jedoch ausreichende Flexibilität der Leitung zum Spulen gegeben sein soll.

Somit kann im Prinzip zu jeder beliebigen Anwendung eine bereits betriebsfertig installierte Leitung, z.B. ein vorhandenes Versorgungskabel oder ein bereits vorhandener Schlauch nachträglich von der Wickelvorrichtung aufgenommen und wahlweise von dieser auf- und abgespult werden, so dass die gewünschte Leitung bei Nichtgebrauch benutzerfreundlich verstaut wird. Es wird vorzugsweise nur genau eine Leitung aufgenommen, es wäre jedoch denkbar mit einer Wickelvorrichtung mehrere Leitungen nachzurüsten, die z.B. dasselbe tragbare Gerät versorgen.

Besonders bevorzugt wird eine unterbrechungsfreien innere Drehführung eingesetzt die eine bandartige Leitungsführungseinrichtung in der Bauweise nach der Lehre aus WO 2011/086198 A2 der Anmelderin aufweist. Diese Leitungsführungseinrichtung hat eine Bauweise mit zwei gegensinnigen Teil-Helices und dazwischen einem variablen Umlenkbogen zur Aufnahme einer oder mehrerer Leitungen wobei hier bevorzugt genau eine Leitung aufgenommen wird. Diese Art Leitungsführungseinrichtung bildet somit insbesondere eine oder mehrere erste Wendellagen, in welchen eine aufgenommene Leitung in der ersten Wickelrichtung um die Drehachse gewunden ist, eine oder mehrere zweite Wendellagen, in welchen die aufgenommene Leitung in der zweiten Wickelrichtung im Gegensinn um die Drehachse gewunden ist, sowie einen Umlenkbogen bildet, der beide Wendellagen verbindet und in welchem die aufgenommene Leitung umgeschlagen ist. Eine solche Leitungsführungseinrichtung ist einfacher zu befüllen, baut kompakter und ist mechanisch weniger anfällig bzw. wartungsärmer als die eingangs genannten vorbekannten unterbrechungsfreien Drehführungen, insbesondere solche mit zwei gegenläufigen Trommeln und einer Umlenkscheibe.

Eine solche bandartige Leitungsführungseinrichtung hat vorzugsweise ihren Festpunkt am Halteteil festgelegt und ihren Drehpunkt am gegenüberliegenden Ende (dem ersten Stirnende) an einem drehbaren Teil der Vorrichtung, insbesondere der Abtriebseite einer Antriebsvorrichtung am Gestell oder am Kopplungsflansch der Spultrommel festgelegt. Dabei kann eine der Verbindungen bzw. Befestigungen, insbesondere des Drehpunkts, auch lösbar, sein um die Leitungsführungseinrichtung ggf. abzunehmen.

Die bevorzugte bandartige Leitungsführungseinrichtung kann dabei ein durchgehendes oder bereichsweise einteiliges Stützband aufweisen. In bevorzugter Ausführungsform wird jedoch eine bandartige Leitungsführungseinrichtung verwendet die aus einzelnen Gliedern, insbesondere aus kreissektorförmigen Gliedern aus Kunststoff, zusammengesetzt ist. Dabei haben die einzelnen Glieder zur Vereinfachung der Montage bzw. Nachrüstung bevorzugt an der radialen Außenseite einen durchgehenden Spalt, der flexibel aufweitbar ist, um eine Leitung in das jeweilige Glied einzulegen und somit nacheinander in die bandartige Leitungsführungseinrichtung einzubringen.

Ungeachtet der Bauart kann die innere Drehführung mit dem Halteteil zu einer Führungseinheit fest verbunden sein. In bevorzugter Ausführungsform sind die Führungseinheit und Spultrommel relativ voneinander lösbar am Gestell angebracht. Hierzu kann entweder nur die Spultrommel, oder nur die Führungseinheit oder es können beide vom Gestell abnehmbar montiert sein, vorzugsweise in wenigen Schritten und mit möglichst Werkzeugeinsatz.

Grundsätzlich ist die Leitungsführungseinrichtung, insbesondere die Führungseinheit mit dieser, vorzugsweise vollständig, insbesondere axial und radial betrachtet, im Innenraum der Spultrommel aufgenommen, sodass eine besonders kompakte Bauweise erzielt wird.

Auch hinsichtlich der Spultrommel liegen unterschiedliche Bauarten im Rahmen der Erfindung. Die Spultrommel kann z.B. einteilig, insbesondere mit überwiegend geschlossener Außenfläche, in Form eines Zylindermantels, ausgeführt sein. Der Querschnitt kann kreiszylindrich oder vieleckig (polygonal) sein. Sie kann ungeachtet dessen am ersten Stirnende einen Kopplungsflansch aufweisen und mit welchem sie lösbar am Gestell montierbar ist.

Die Spultrommel kann auch einen mehrteiligen Aufbau aus einer Anzahl lösbar verbundener Einzelteilen aufweisen, ggf. mit nicht geschlossener Außenfläche, z.B. ähnlich einer Haspel z.B. Schlauchhaspel bzw. Drahthaspel oder dgl. mit über den Umfang mehreren axialen Stäben bzgl. welchen die Leitung auf- und abgewickelt wird.

Die Spultrommel kann auch mit überwiegend geschlossener Außenfläche mehrteilig sein, insbesondere einen zylindrischen Mantel aus mindestens zwei lösbar verbindbaren Mantelteilen, z.B. im Wesentlichen aus zwei Halbzylinderschalen bestehend, hergestellt sein, wobei mindestens einige der Einzelteile welche vom Gestell abnehmbar sind.

Insbesondre bei beidseitig fest angeschlossener Leitung ist es vorteilhaft, wenn die Spultrommel einen von der ersten Aussparung ausgehenden und zum zweiten Stirnende durchgehenden, insbesondere in Axialrichtung verlaufenden, Einführschlitz zum Einführen einer Leitung aufweist, sodass keine endseitige Vorrichtung durch die Trommel durchgeführt werden muss bzw. kleinere Trommeldurchmesser ermöglicht werden.

Die Trommel kann lediglich einseitig, am ersten Stirnende einen Stirnflansch aufweisen und freitragend gelagert sein und/oder am anderen Stirnende insbesondere von dem mit dem Gestell drehfest verbundenen Halteteil drehbar gehalten bzw. gelagert sein.

In bevorzugter Weiterbildung hat die Wickelvorrichtung am Gestell eine Antriebsvorrichtung, insbesondere zum selbsttätigen oder automatischen Aufwickeln der Leitung. Die Antriebsvorrichtung kann in Montagestellung mit dem ersten Stirnende der Spultrommel, insbesondere lösbar mit dem Kopplungsflansch, momentübertragend gekoppelt sein. Es kommen unterschiedliche Antriebe in Betracht. Bevorzugt wird eine energiesparende Antriebsvorrichtung, die als Federantrieb zum selbsttätigen Aufrollen ausgeführt ist und beim Abrollen Energie speichert. Dabei kommt jeder geeignete herkömmliche Federantrieb in Betracht, insbesondere wie für Kabelaufwickler bekannt, z.B. ein Spiralfeder-Antrieb mit schneckenförmig aufgewickelter Bandfeder, bzw. ein Rollfeder-Antrieb. Es kann auch ein Federantrieb in Federwellentechnik koaxial, z.B. in einer hohlen Stützwelle der inneren Drehführung vorgesehen werden.

Für eine einfache und benutzerfreundliche Bedienung der Wickelvorrichtung hat der Federantrieb vorzugsweise eine Spulautomatik mit Rücklaufsperre, z.B. mit Sperrklinkenmechanismus. Durch kurzes Ruckartiges Ziehen an der Leitung kann so ein selbsttätiges Aufspulen ausgelöst bzw. das Aufspulen gestoppt werden, auch aus einer Entfernung zur Wickelvorrichtung.

Insbesondere wenn die Spultrommel nur einseitig, am ersten Stirnende einen Stirnflansch aufweist, ist bevorzugt vorgesehen, dass das Halteteil in Art einer Stützscheibe ausgeführt ist mit einem zumindest bereichsweise kreisringförmigen Stützbereich, an welchem das zweite Stirnende der Spultrommel gleitend oder rollend drehgelagert ist. Dies kann vorzugsweise mittels Stützrollen erzielt werden, auf welchen eine Innenseite der Spultrommel drehgelagert ist. Ungeachtet dessen kann ein solches das Halteteil, quasi als Ersatz für den Stirnflansch am zweiten Stirnende dienen, und/oder den gestellfesten Festpunkt der inneren Drehführung bilden.

Das Halteteil kann Bestandteil der als Einheit montierten Führungseinheit mit der inneren Drehführung dienen, insbesondere wenn diese aus der freitragend montierten Spultrommel axial demontierbar sein soll.

In mechanisch einfacher Bauweise hat das Gestell zwei gegenüberliegende Halteplatten, zwischen welchen beide Stirnenden der Spultrommel gehalten sind, insbesondere beidseitig drehbar gelagert sind. Eine Halteplatte kann dabei gegenüber der anderen schwenkbar am Gestell angebracht sein um das Abnehmen der Spultrommel zu erleichtern. Alternativ kann das Gestell, insbesondere mit einer Spultrommel die nur einseitig einen Stirnflansch aufweist, genau eine Halteplatte am ersten Stirnende der Spultrommel aufweisen. In diesem Fall ist das Halteteil bevorzugt gegenüberliegend an einem zur Drehachse koaxialen Halteschaft befestigt. Dieser kann als Hohlschaft ausgeführt sein und z.B. eine Federwelle aufnehmen als Alternative zu einem Spiralfederantrieb.

In einer Ausführungsform kann ein Wickel-Verstellmechanismus vorgesehen sein mit einem parallel zur Drehachse verstellbaren Führungskopf zum Führen einer Leitung während des Aufspulens, wobei der Führungskopf über ein Getriebe, insbesondere einen Spindeltrieb oder dgl., mit der Spultrommel bzw. der Abtriebseite der Antriebsvorrichtung gekoppelt, insbesondere mechanisch gekoppelt ist, sodass der Aufspulpunkt der Leitung auf der Spultrommel während dessen Drehung in Achsrichtung verschoben wird, insbesondere um mindestens einen Leitungsdurchmesser pro Umdrehung.

Ein solcher Wickel-Verstellmechanismus sorgt für eine gleichmäßige und schonende spiralige Auf- und Abwicklung der Leitung ohne ungewollte Überkreuzungen indem eine geregelte bzw. geordnete Verlegung auf der Trommel erzielt wird, d.h. mit der Drehung wird die Leitung quasi kontinuierlich in Achsrichtung verschoben wird. Die Verschiebung beträgt pro Trommelumdrehung bevorzugt mindestens einen Kabeldurchmesser. Der Verstellmechanismus als Führungskopf beispielsweise eine Verlegehand bzw. mindestens eine Führungsrolle, zwei gegenüberliegenden Führungsrollen, aufweisen um die Leitung zu schonen. Eine mechanische Kopplung in Verbindung mit einem Federantrieb wird bevorzugt, sodass ein eigener motorischer Antrieb und entsprechender Steuerungsaufwand entfällt. Dabei kann jede bekannte Bauart verwendet werden, ggf. auch mit selbsttätiger endseitiger Richtungsumstellung zum Hin- und Herfahren wie z.B. in DE10300960A1 oder in EP1445228A2.

Ergänzend aber insbesondere alternativ zum Wickel-Verstellmechanismus kann in einer baulich einfacheren Lösung eine kontrollierte spiralige Auf- und Abwicklung erzielt werden, wenn die Spultrommel einen zumindest überwiegend zylindrischen Mantel aufweist mit einer spiraligen Profilierung an der Außenseite zum geführten Aufrollen der Leitung. Dabei sollte der Windungsabstand in Axialrichtung vorzugsweise dem maximalen Aufnahmequerschnitt der inneren Drehführung entsprechen. Ferner kann optional eine in Axialrichtung erstreckte Andrückrolle vorgesehen sein, welche die Leitung in die Profilierung drückt, z.B. durch Federbelastung.

Zur gesteigerten Freiheit bei der Formgebung, besseren elektrischen Isolierung und/oder Gewichtsreduzierung der drehenden Teile kann die innere Drehführung, die Spultrommel und/oder das Halteteil zumindest überwiegend aus Kunststoffteilen hergestellt sein, z.B. aus Spritzgussteilen.

Die bevorzugte bandartige Leitungsführungseinrichtung als innere Drehführung für die Leitung hat vorzugsweise beidseitig eine Zugentlastung für die Leitung. Hierzu kann die Spultrommel am ersten Stirnende, insbesondere an der ersten Aussparung eine Haltezunge aufweisen, an welcher eine Zugentlastung für die Leitung vorgesehen ist.

In einer von vielen möglichen Anwendungen wird die Wickelvorrichtung für genau ein auf- und abspulbares elektrisches Steuersignal- und/oder Stromversorgungskabel verwendet, wobei dieses unterbrechungsfrei durch die innere Drehführung vom Festpunkt zum Drehpunkt eingelegt bzw. geführt ist.

Die Wickelvorrichtung bietet viele Einsatzmöglichkeiten. Sie kann insbesondere zum Nachrüsten einer bereits betriebsfertig installierten Leitung, insbesondere eines Kabels verwendet werden um dieses kompakt zu verstauen sowie bedarfsweise auf- bzw. abzuspulen. Die Wickelvorrichtung erlaubt insbesondere eine Nachrüstung einer vorkonfektionierten bzw. zumindest einseitig bereits angeschlossenen Leitung und/oder einer an einem tragbaren Gerät angeschlossenen Leitung, wie z.B. in einer Werkshalle oder Werkstatt. Rein beispielhaft kann die Wickelvorrichtung z.B. zum Verstauen des Kabels eines Programmierhandgeräts eines Industrieroboters eingesetzt werden, sodass ein zeitaufwendiges Aufwickeln und Verstauen von Hand entfällt und das Kabel beim Anlagenbetrieb geschützt aufbewahrt ist. Vorzugweise weist die Wickelvorrichtung eine abnehmbare Verkleidung auf um die beweglichen Teile und die aufgespulte Leitung zu schützen.

Weitere Merkmale und Vorteile der Erfindung sind ohne Beschränkung des Schutzumfangs der nachfolgenden, ausführlicheren Beschreibung bevorzugter Ausführungsbeispiele anhand der beiliegenden Figuren zu entnehmen. Hierbei zeigen:
**FIG.1A-1G****:** ein erstes Ausführungsbeispiel einer Wickelvorrichtung in montierter Perspektivansicht (FIG.1A), im Längsschnitt (FIG.1B), in einem Querschnitt (FIG.1C), sowie in unterschiedlichen Explosionsdarstellungen wesentlicher Komponenten (FIG.1D-1G) ;
**FIG.2A-2C****:** unterschiedliche Ausführungsformen einer Spultrommel zur Verwendung in einer erfindungsgemäßen Wickelvorrichtung, z.B. nach FIG.1A-1G, jeweils in perspektivischer Darstellung;
**FIG.3****:** ein zweites, vereinfachtes Ausführungsbeispiel einer beidseitig gelagerten Wickelvorrichtung; und
**FIG.4****:** ein drittes Ausführungsbeispiel mit einer einseitig gelagerten Wickelvorrichtung teilweise explodiert bzw. demontiert in perspektivischer Ansicht.

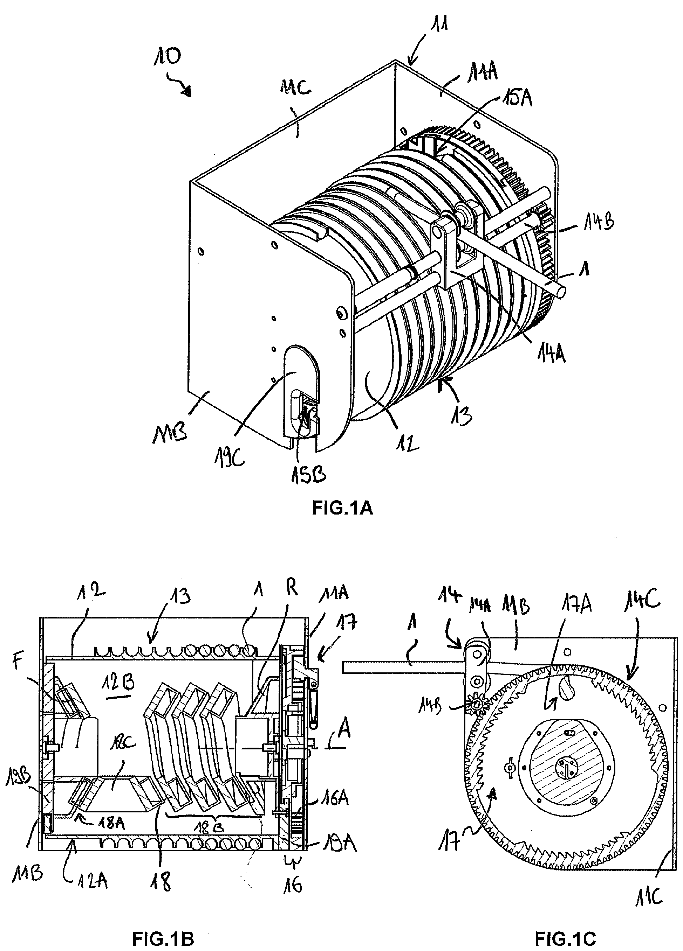

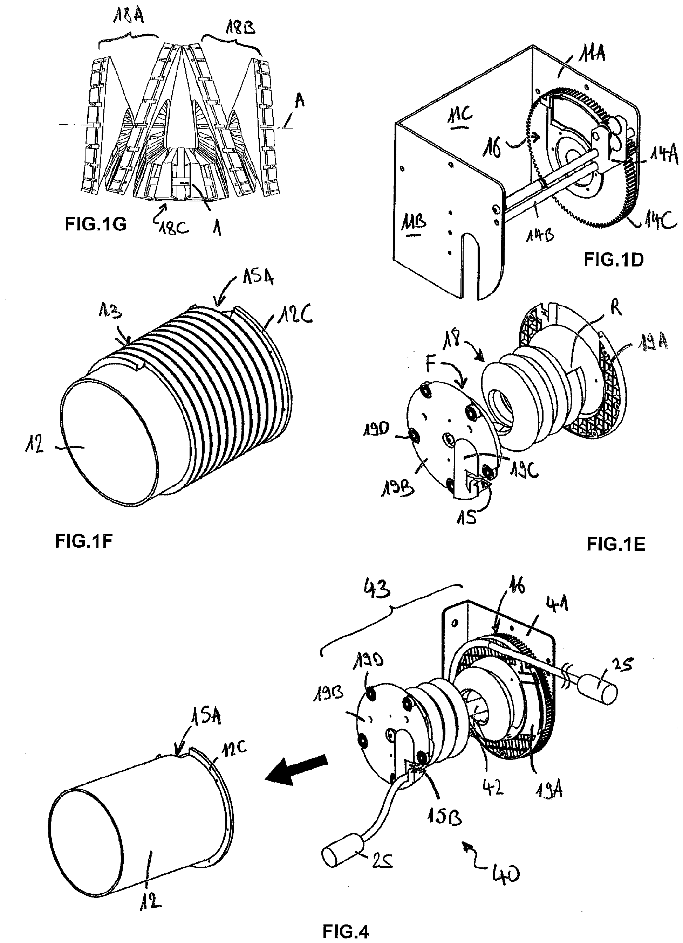

In FIG.1A-1G ist eine Wickelvorrichtung allgemein mit 10 bezeichnet. Die Wickelvorrichtung 10 dient zum Verstauen sowie bedarfsweise auf- und abspulen einer schematisch gezeigten, flexiblen Leitung 1, z.B. ein elektrisches Kabel zur Stromversorgung und/oder Datenübertragung. Die Wickelvorrichtung 10 umfasst ein Gestell 11 mit zwei gegenüberliegenden Halteplatten 11A, 11B, zwischen denen eine hohle, kreiszylindrische Spultrommel 12 um eine Drehachse A drehbar gelagert ist. Die Halteplatten 11A, 11B sind hier fest mit einer rückseitigen Montageplatte 11C verbunden und bilden ein in Draufsicht etwa C-förmiges raumfestes Gestell 11 für die drehbare Spultrommel. Die Leitung 1 ist auf der Außenseite 12A der Spultrommel 12 spiralförmig aufwickelbar, hierzu kann eine optionale Profilierung 13 an der Außenseite 12A der Spultrommel 12 vorgesehen sein. Die Profilierung 13 unterstützt ein kontrolliertes, spiralförmiges auf- und abwickeln und ist entsprechend schneckenförmig um die Achse A angeordnet und in Querschnitt etwa kreisförmig (FIG.1B).

Im Ausführungsbeispiel nach FIG.1A-1G ist weiterhin ein optionaler Wickel-Verstellmechanismus 14 vorgesehen, mit einem parallel zur Drehachse verstellbaren Führungskopf 14A zum Führen der Leitung 1 während des Spulens. Der Führungskopf 14A ist parallel zur Drehachse A verfahrbar gelagert über einen Spindeltrieb mit einer Gewindespindel 14B über eine Außenverzahnung 14C, die mit der Spultrommel 12 drehfest verbunden ist mechanisch an die Bewegung der Spultrommel 12 gekoppelt. So wird der Aufspulpunkt der Leitung 1 auf der Spultrommel 12, hier z.B. auf der Profilierung 13 während der Drehung in Achsrichtung parallel zur Drehachse A in gewünschtem Maße verschoben. Zum Schutz der Leitung 1 hat der Führungskopf 14A gegenüberliegende Führungsrollen für die Leitung 1. FIG.1B zeigt weiterhin im Längsschnitt entlang der Drehachse A eine Antriebsvorrichtung 16, in Form eines Spiralfeder-Antriebs mit um die Drehachse A aufgewickelter Spiralfeder 16A, zum selbsttätigen Aufrollen der Leitung 1 auf der Spultrommel 12. Die Antriebsvorrichtung 16 kann jede geeignete Bauart aufweisen, wie z.B. für Kabelaufwickler bekannt. FIG.1C zeigt weiterhin eine mit der Antriebsvorrichtung wirkverbunden Spulautomatik 17 mit Rücklaufsperre, hier in Form eines Sperrklinkenmechanismus 17A an der Innenseite der Außenverzahnung 14C und die Antriebsvorrichtung 16 umgebend. Auch die Spulautomatik 17 mit Rücklaufsperre 17A kann eine beliebige an sich bekannte Weise haben und dient dazu der Arretierung der Spultrommel 12 bei manuellem Abspulen und auch beim Nachrüstend er Leitung 1 mit der Trommelvorrichtung 10. Durch kurzes ruckartiges Anziehen der Leitung 1 kann die Arretierung gelöst und die Leitung 1 wird durch die beim Abspulen gespannte Spiralfeder 16A wieder selbsttätig aufgewickelt. Durch die Rücklaufsperre 17A kann die Spultrommel 12 in unterschiedlichen Stellungen gegen die Federkraft Spiralfeder 16A arretiert werden.

Wie FIG.1B zeigt begrenzt die hier mit einem Zylindermantel ausgeführte Spultrommel 12 einen Innenraum 12B. Im Innenraum 12B ist zur unterbrechungsfreien Führung der Leitung 1 eine innere Drehführung, hier eine bandartige Leitungsführungseinrichtung 18 zur Aufnahme der Leitung 1 vollständig aufgenommen. Die Leitungsführungseinrichtung 18 ist schematisch in FIG.1G veranschaulicht, wobei dort rein beispielhaft ein durchgehendes Band gezeigt ist, jedoch auch eine Bauweise aus einzelnen zusammengesetzten Gliedern möglich ist. Hinsichtlich der Bauweise der Leitungsführungseinrichtung 18 wird die Lehre aus WO 2011/086198 A2 durch Verweis zur Verkürzung hier einbezogen.

Die Leitungsführungseinrichtung 18 bildet je nach Drehstellung erste Wendellagen 18A, in welchen eine aufgenommene Leitung 1 in einer ersten Wickelrichtung um die Drehachse A gewunden ist sowie zweite Wendellagen 18B, in welchen die aufgenommene Leitung 1 in der zweiten Wickelrichtung im Gegensinn um die Drehachse gewunden ist, vgl. FIG.1G. Zwischen den Wendellagen 18A, 18B verfährt, beim Drehen ein positionsvariabler Umlenkbogen 18C axial ggf. umlaufend. Der Umlenkbogen 18C verbindet beide Wendellagen 18A, 18C und gewährleistet bei vorgegebenen Krümmungsradius ein umschlagen der Wicklungsrichtung bzw. des Drehsinns der Leitung 1 um die Drehachse A. Dank der Leitungsführungseinrichtung 18 kann die Leitung 1 unterbrechungsfrei und ohne aufgetrennt zu werden mit der Wickelvorrichtung 10 nachgerüstet werden. Zum vereinfachten Nachrüsten bilden die einzelnen Segmente bzw. Glieder der Leitungsführungseinrichtung 18 jeweils einen radial nach außen offenen und im Verlaufrichtung durchgehenden Spalt 18D, welcher elastisch aufweitbar ist. Die Leitungsführungseinrichtung 18 ist vorzugsweise aus Kunststoff gefertigt. Der Windungsabstand in Axialrichtung der Profilierung 13 und der maximale Aufnahmequerschnitt der Leitungsführungseinrichtung 18, hier die freie Bauhöhe des Aufnahmeraums (FIG.1A) der Segmente bzw. Gliedern, sind zueinander passend gewählt, sodass der kleinste und auch der maximal aufnehmbare Querschnitt einer Leitung 1 kontrolliert gespult werden kann.

Die Leitungsführungseinrichtung 18 ist mit einem Ende bzw. den Wendellagen 18B an einem Drehpunkt R festgelegt, welcher an einem Kopplungsflansch 19A einem ersten Stirnende der Spultrommel 12 vorgesehen ist. Mit dem anderen Ende bzw. den Wendellagen 18A ist die Leitungsführungseinrichtung 18 an einem bezüglich des Gestells 11 drehfesten Festpunkt F festgelegt, welcher an einem tellerartigen bzw. scheibenförmigen Halteteil 19B am gegenüberliegenden Stirnende der Spultrommel 12 vorgesehen ist.

Der Halteteil 19B ist als Stützscheibe ausgeführt und mit der Halteplatte 11B in Montagestellung drehfest verbunden durch einen stirnseitigen Vorsprung 19C am Halteteil 19B der formschlüssig in eine nach außen offene Aufnahme der Halteplatte 11B eingreift, wie ein Vergleich von FIG.1A mit FIG.1D-1E zeigt. Der Halteteil 19B bildet somit den gestellfesten Festpunkt F.

Der Halteteil 19B bildet umfangsseitig einen kreisringförmigen Stützbereich mit umfänglich verteilten Stützrollen 19D, auf welchen die Innenseite des zweiten Stirnendes der Spultrommel 12 abgestützt abrollt bzw. drehgelagert ist.

Das gegenüberliegende erste Stirnende der Spultrommel 12 ist wie FIG.1E-1F zeigen lösbar mit dem Kopplungsflansch 19A verbunden. Der Kopplungsflansch 19A bildet den Drehpunkt R und ist über eine stirnseitige Aufnahme drehfest aber in Radialrichtung leicht lösbar mit der Abtriebseite der Antriebsvorrichtung 16 verbunden, wie FIG.1D-1E veranschaulichen. Der Kopplungsflansch 19A, die Leitungsführungseinrichtung 18 und der Halteteil 19B zu einer Führungseinheit verbunden die einfach axial aus der Spultrommel 12 entnehmbar ist (vgl. FIG.1E-1F) nachdem der Formschluss zwischen Kopplungsflansch 19A bzw. Halteteil 19B und dem Gestell 11 sowie ggf. eine zugehörige Sicherung, z.B. durch Splint oder Schraube, gelöst wurde (nicht gezeigt), und die Befestigung des Stirnflanschs 12C der Spultrommel 12 vom Kopplungsflansch 19A getrennt wurde, z.B. durch Lösen einer Schraubverbindung, Verrastung, oder dgl. Somit kann die Leitung 1 nachträglich und einfach in die Leitungsführungseinrichtung 18 eingebracht werden.

Weiterhin zeigen FIG.1E-1F in der Spultrommel 12 eine erste Mündung bzw. Aussparung 15A, welche etwa in Axialrichtung bezogen auf die Drehachse A stirnseitig offen mündet, und eine zweite Mündung bzw. Aussparung 15B am Halteteil 19B, welche in radialer Ebene senkrecht zur Drehachse A, hier nicht exakt radial, nach außen offen mündet. Dank der Aussparungen 15A, 15B kann eine zu spulende Leitung 1 von der Spultrommel 12 bzw. außen in deren Innenraum 12B und von dort wieder heraus geführt und auch nachträglich leicht verlegt werden.

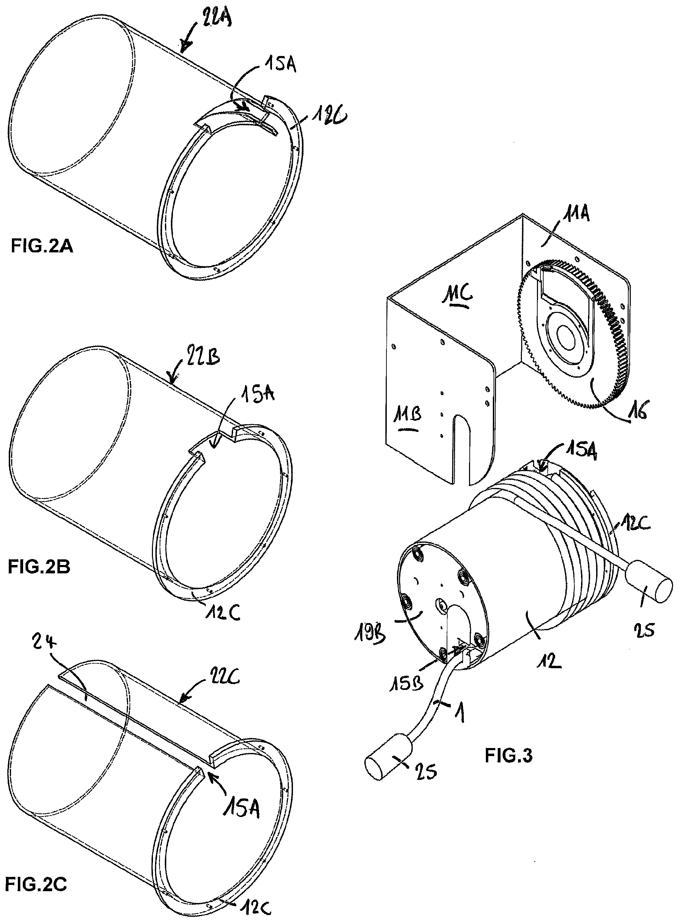

FIG.2A-2B zeigen verschiedene Varianten von Spultrommeln 22A, 22B, 22C die in einer Spulvorrichtung 10, z.B. nach FIG.1A-1G, gleichwertig verwendbar sind, und hier als im wesentlichen kreiszylindrische Trommeln ausgeführt sind.

Die Spultrommel 22A in FIG.2A hat am einseitigen Stirnflansch 12C eine Mündung bzw. Aussparung 15A die in Axialrichtung offen mündet und zudem eine Haltezunge 23 aufweist welche als Knickschutz für die Leitung 1 und zum Befestigen einer Zugentlastung (nicht gezeigt) für die Leitung 1 radial nach Innen entlang der Aussparung 15A zuläuft.

Die Spultrommel 22B in FIG.2B hat am einseitigen Stirnflansch 12C eine als einfacher etwa rechteckiger Ausschnitt ausgeführte Mündung bzw. Aussparung 15A axial zur Stirnseite und ebenfalls den Stirnflansch 12C unterbrechend bzw. durchbrechend.

Die Spultrommel 22C in FIG.2C schließlich hat einen in Axialrichtung zwischen beiden Stirnenden durchgehenden Einführschlitz 24 zum Einführen einer Leitung 1, der am ersten Stirnende bzw. am Stirnflansch 12C in die Aussparung 15A übergeht bzw. von dieser gebildet wird. Die Spultrommel 22C erlaubt es insbesondere auch eine beidseitig bereits fest angeschlossene Leitung 1 nachträglich mit der Wickelvorrichtung auszurüsten, oder aber eine Leitung 1, bei welcher angeschlossene Geräte oder Stecker 25 (in FIG.3-4 nur ganz schematisch gezeigt) Abmessungen aufweisen, welche nicht durch eine Spultrommel 22A bzw. 22B nach FIG.2A-2B durchführbar sind.

FIG.3 zeigt eine Abwandlung von FIG.1A-1G welche sich insbesondere dadurch unterscheidet, dass keine Profilierung 13 und kein Wickel-Verstellmechanismus 14 vorgesehen ist und ist ansonsten baugleich. FIG.3 veranschaulicht schematisch an der Leitung 1 vorinstallierte Geräte bzw. vorkonfektionierte Steckvorrichtungen, allgemein mit 25 bezeichnet.

FIG.4 zeigt eine Variante der Führungsvorrichtung 40 bei welcher Kopplungsflansch 19A, die Leitungsführungseinrichtung 18 und der Halteteil 19B zu einer Führungseinheit 43 fest verbunden sind und die Führungseinheit 43 freitragend an einem nur einseitig tragenden Gestell 41 befestigt ist. Hier muss somit nur die Spultrommel 12 bzw. 22A, 22B oder 22C demontiert werden um eine Leitung 1 in der Wickelvorrichtung 40 zu installieren. Bei dieser Bauform mit in Art eines freitragenden Auslegers bzw. Kragarms am einseitigen Gestell 41 befestigten Führungseinheit 43 ist ein koaxialer Halteschaft 42 vorgesehen, mit welchem der Halteteil 19B fest, insbesondere Drehest am Gestell 41 befestigt ist. Somit ist hier keine lösbare Schnittstelle zwischen Kopplungsflansch 19A und dem Antrieb 16 erforderlich, d.h. in dieser vereinfachten Bauweise bildet der Kopplungsflansch 19A unmittelbar die Abtriebseite des Antriebs 16, der ansonsten gemäß FIG.1B-1C gestaltet sein kann.

Andere Merkmale der alternativen Ausführungsbeispiele nach FIG.3-4, insbesondere die beidendseitigen Durchführöffnungen bzw. Aussparungen 15A bzw. 15B, entsprechen der weiter oben erläuterten Bauweise nach FIG.1A-2C.

## Patentansprüche

1. Wickelvorrichtung (10) zum Auf- und Abspulen einer flexiblen Leitung (1), wie eines Kabels, Schlauchs oder dgl., umfassend ein ortsfest montierbares Gestell (11);
eine hohlzylindrische Spultrommel (12), welche am Gestell um eine Drehachse (A) drehbar gelagert ist, einen Innenraum (12B) bildet und eine Außenseite (12A) aufweist auf bzw. von welcher eine Leitung auf- bzw. abspulbar ist;
eine innere Drehführung (18) zur unterbrechungsfreien Führung einer Leitung (1) von einem gestellfesten Festpunkt (F) zu einem Drehpunkt (R), welcher mit der Spultrommel (12) drehfest ist und um die Drehachse zum Festpunkt relativdrehbar ist, wobei die Drehführung zwischen Festpunkt und Drehpunkt einen Leitungsverlauf mit zwei gegensinnigen Wicklungen (18A, 18B) vorgibt mit einer ersten Wickelrichtung um die Drehachse (A), einer um die Drehachse drehbaren Umlenkung (18C), in welcher die Leitung von der einen Wicklung (18A) in die andere Wicklung (18B) umgeschlagen ist, und mit einer zweiten Wickelrichtung, im Gegensinn zur ersten Wickelrichtung;
wobei die innere Drehführung (18) zumindest überwiegend, vorzugsweise vollständig im Innenraum (12B) der Spultrommel (12) aufgenommen ist; **dadurch gekennzeichnet, dass** die Spultrommel (12) an einem ersten Stirnende, auf dessen Seite der Drehpunkt (R) der inneren Drehführung (18) vorgesehen ist, eine erste Aussparung (15A) aufweist, welche in Axialrichtung bezogen auf die Drehachse (A) stirnseitig offen mündet, und dass am gegenüberliegenden zweiten Stirnende ein mit dem Gestell drehfest verbundener Halteteil (19B) vorgesehen ist, der eine zweite Aussparung (15B) aufweist, welche in radialer Ebene senkrecht zur Drehachse (A) nach außen offen mündet, sodass eine zu spulende Leitung (1) von der Außenseite durch die erste Aussparung zum Drehpunkt (R) der inneren Drehführung, in der inneren Drehführung und von deren Festpunkt (F) durch die zweite Aussparung bzw. umgekehrt verlegbar ist.

2. Wickelvorrichtung nach Anspruch 1, **dadurch gekennzeichnet, dass** die innere Drehführung eine bandartige Leitungsführungseinrichtung (18) zur Aufnahme einer Leitung aufweist und wobei die Leitungsführungseinrichtung eine oder mehrere erste Wendellagen (18A), in welchen eine aufgenommene Leitung in der ersten Wickelrichtung um die Drehachse gewunden ist, eine oder mehrere zweite Wendellagen (18B), in welchen die aufgenommene Leitung in der zweiten Wickelrichtung im Gegensinn um die Drehachse gewunden ist, sowie einen Umlenkbogen (18C) bildet, der beide Wendellagen verbindet und in welchem die aufgenommene Leitung (1) umgeschlagen ist.

3. Wickelvorrichtung nach Anspruch 2, **dadurch gekennzeichnet, dass** die Leitungsführungseinrichtung (18) aus einzelnen Gliedern, zusammengesetzt ist, welche vorzugsweise jeweils an der radialen Außenseite einen durchgehenden Spalt aufweisen, der aufweitbar ist, um eine Leitung in das jeweilige Glied einzulegen.

4. Wickelvorrichtung nach Anspruch 1, 2 oder 3, **dadurch gekennzeichnet, dass** die innere Drehführung (18) mit dem Halteteil (19B) zu einer Führungseinheit verbunden ist, wobei Führungseinheit und Spultrommel voneinander lösbar sind, wobei die Führungseinheit vorzugsweise vollständig im Innenraum der Spultrommel aufgenommen ist.

5. Wickelvorrichtung nach einem der Ansprüche 1 bis 4, **dadurch gekennzeichnet, dass** die Spultrommel (12) einteilig, insbesondere in Form eines Zylindermantels, ausgeführt ist; oder
die Spultrommel einen mehrteiligen Aufbau aus einer Anzahl lösbar verbundener Einzelteilen aufweist, insbesondere einen zylindrischen Mantel aus mindestens zwei lösbar verbindbaren Mantelteilen; oder
die Spultrommel (22C) einen von der ersten Aussparung (15A) ausgehenden und zum zweiten Stirnende durchgehenden, insbesondere in Axialrichtung verlaufenden, Einführschlitz (24) zum Einführen einer Leitung aufweist; oder
die Spultrommel (12) am ersten Stirnende mittels eines Kopplungsflansches (19A) lösbar am Gestell (11) montiert ist.

6. Wickelvorrichtung nach einem der Ansprüche 1 bis 5, insbesondere nach Anspruch 5, **dadurch gekennzeichnet, dass** am Gestell (11) eine Antriebsvorrichtung (16) vorgesehen ist, welche in Montagestellung mit dem ersten Stirnende der Spultrommel (12), insbesondere lösbar mit dem Kopplungsflansch (19A), momentübertragend gekoppelt ist.

7. Wickelvorrichtung nach Anspruch 6, **dadurch gekennzeichnet, dass** die Antriebsvorrichtung als Federantrieb (16A) zum selbsttätigen Aufrollen ausgeführt ist wobei dem Federantrieb vorzugsweise eine Spulautomatik (17) mit Rücklaufsperre (17A) zugeordnet ist.

8. Wickelvorrichtung nach einem der Ansprüche 1 bis 7, **dadurch gekennzeichnet, dass** der Halteteil in Art einer Stützscheibe (19B) ausgeführt ist mit einem zumindest bereichsweise kreisringförmigen Stützbereich, an welchem das zweite Stirnende der Spultrommel (12) gleitend oder rollend drehgelagert ist, vorzugsweise mit Stützrollen (19D), auf welchen eine Innenseite der Spultrommel (12) drehgelagert ist und/oder der Halteteil (19B) den gestellfesten Festpunkt (F) der inneren Drehführung bildet.

9. Wickelvorrichtung nach einem der vorstehenden Ansprüche, wobei das Gestell (11) zwei gegenüberliegende Halteplatten (11A, 11B) aufweist, zwischen welchen die Stirnenden der Spultrommel (12) gehalten sind; oder dass das Gestell genau eine Halteplatte am ersten Stirnende der Spultrommel aufweist, wobei das Halteteil gegenüberliegend an einem zur Drehachse (A) koaxialen Halteschaft befestigt ist.

10. Wickelvorrichtung nach einem der vorstehenden Ansprüche, **dadurch gekennzeichnet, dass** ein Wickel-Verstellmechanismus (14) vorgesehen ist mit parallel zur Drehachse verstellbaren Führungskopf (14A) zum Führen einer Leitung während des Aufspulens, wobei der Führungskopf über ein Getriebe, insbesondere einen Spindeltrieb (14B), mit der Drehbewegung der Spultrommel (12) gekoppelt ist, sodass der Aufspulpunkt der Leitung (1) auf der Spultrommel während deren Drehung in Achsrichtung verschoben wird.

11. Wickelvorrichtung nach einem der vorstehenden Ansprüche, **dadurch gekennzeichnet, dass** die Spultrommel einen zylindrischen Mantel aufweist mit einer spiraligen Profilierung (13) an der Außenseite zum geführten Aufrollen der Leitung (1).

12. Wickelvorrichtung nach einem der vorstehenden Ansprüche, **dadurch gekennzeichnet, dass** die innere Drehführung, die Spultrommel und/oder das Halteteil zumindest überwiegend aus Kunststoffteilen besteht.

13. Wickelvorrichtung nach einem der vorstehenden Ansprüche, **dadurch gekennzeichnet, dass** die Spultrommel (22A) am ersten Stirnende, insbesondere an der ersten Aussparung eine Haltezunge (23) aufweist, an welcher eine Zugentlastung für die Leitung (1) vorgesehen ist.

14. Wickelvorrichtung nach einem der vorstehenden Ansprüche umfassend genau ein auf- und abspulbares elektrisches Steuersignal- und/oder Stromversorgungskabel (1), welches unterbrechungsfrei durch die innere Drehführung (18) vom Festpunkt (F) zum Drehpunkt (R) geführt ist.

15. Verwendung einer Wickelvorrichtung nach einem der Ansprüche 1 bis 14 zum Verstauen sowie bedarfsweisen Auf- und Abspulen einer Leitung, insbesondere einer vorkonfektionierten bzw. zumindest einseitig bereits angeschlossenen Leitung und/oder einer an einem tragbaren Gerät angeschlossenen Leitung, wie z.B. in einer Werkshalle oder Werkstatt.

## Claims

1. A winding device (10) for winding and unwinding a flexible line (1) like a cable, hose or the like, including
a frame (11) which can be stationarily mounted;
a hollow-cylindrical winding drum (12) which is mounted to the frame rotatably about an axis of rotation (A), forms an internal space and has an outside (12A) on to and from which a line can be wound and unwound;
an inner rotary guide (18) for interruption-free guidance of a line (1) from a fixed point (F) which is fixed with respect to the frame to a rotary point (R) which is rotationally fixed to the winding drum (12) and is relatively rotatable about the axis of rotation with respect to the fixed point,
wherein the rotary guide between the fixed point and the rotary point predetermines a line path with two oppositely directed windings (18A, 18B) with a first winding direction about the axis of rotation (A), a direction-changing means (18C) which is rotatable about the axis of rotation and in which the line is changed over from the one winding (18A) into the other winding (18B) and a second winding direction in opposite relationship to the first winding direction;
wherein the inner rotary guide (18) is accommodated at least predominantly and preferably completely in the internal space (12B) of the winding drum (12);
**characterised in that** the winding drum (12) has a first opening (15A) at a first end, on the side of which the rotary point (R) of the inner rotary guide (18) is provided, which opening (15A) opens out at the end in the axial direction with respect to the axis of rotation (A), and that provided at the opposite second end is a holding portion (19B) which is non-rotatably connected to the frame and which has a second opening (15B) which opens outwardly in a radial plane perpendicularly to the axis of rotation (A) so that a line (1) to be wound can be laid from the outside through the first opening to the rotary point (R) in the inner rotary guide, in the inner rotary guide and from the fixed point (F) thereof through the second opening and vice-versa.

2. A winding device according to claim 1 **characterised in that** the inner rotary guide has a belt-like line guide device (18) for receiving a line and wherein the line guide device forms one or more first spiral layers (18A) in which a received line is wound about the axis of rotation in the first winding direction, one or more second spiral layers (18B) in which the received line is wound in the opposite direction about the axis of rotation in the second winding direction, and a direction-changing arc (18C) which connects the two spiral layers and in which the received line (1) is changed over.

3. A winding device according to claim 2 **characterised in that** the line guide device (18) is composed of individual members which preferably each have at the radial outside a continuous gap which can be expanded to insert a line into the respective member.

4. A winding device according to claim 1, claim 2 or claim 3 **characterised in that** the inner rotary guide (18) is connected to the holding portion (19B) to provide a guide unit, wherein the guide unit and the winding drum are releasable from each other, wherein the guide unit is preferably completely accommodated in the internal space in the winding drum.

5. A winding device according to one of claims 1 to 4 **characterised in that** the winding drum (12) is of a one-piece configuration, in particular in the form of a peripheral cylindrical casing; or
the winding drum is of a multi-part structure comprising a number of releasably connected individual parts, in particular a cylindrical casing comprising at least two casing portions which can be releasably connected; or
the winding drum (22C) has an insertion slot (24) for the insertion of a line, which slot starts from the first opening (15A) and extends continuously to the second end, in particular in the axial direction; or
the winding drum (12) is mounted to the frame (11) releasably at the first end of the drum by means of a coupling flange (19A).

6. A winding device according to one of claims 1 to 5, in particular according to claim 5, **characterised in that** provided on the frame (11) is a drive device (16) which in the assembled position is torque-transmittingly coupled to the first end of the winding drum (12), in particular releasably with the coupling flange (19A).

7. A winding device according to claim 6 **characterised in that** the drive device is in the form of a spring drive (16A) for automatically winding on, wherein preferably an automatic winding means (17) having a reversemotion lock (17A) is associated with the spring drive.

8. A winding device according to one of claims 1 to 7 **characterised in that** the holding portion is designed in the manner of a support disc (19B) with a support region which at least region-wise is in the form of a circular ring and at which the second end of the winding drum (12) is slidingly or rollingly rotatably mounted, preferably with support rollers (19D), on which an inside of the winding drum (12) is rotatably mounted and/or the holding portion (19B) forms the fixed point (F) that is fixed with respect to the frame of the inner rotary guide.

9. A winding device according to one of the preceding claims wherein the frame (11) has two oppositely disposed holding plates (11A, 11B), between which the ends of the winding drum (12) are held; or the frame has precisely one holding plate at the first end of the winding drum, wherein the holding portion is fixed in opposite relationship to a holding shaft which is coaxial with the axis of rotation (A).

10. A winding device according to one of the preceding claims **characterised in that** there is provided a winding adjustment mechanism (14) with a guide head (14A) which is displaceable parallel to the axis of rotation for guiding a line during the winding-on operation, wherein the guide head is coupled to the rotary movement of the winding drum (12) by way of a transmission means, in particular a spindle drive (14B), so that the winding-on point of the line (1) on the winding drum is displaced in the axial direction during rotation of the winding drum.

11. A winding device according to one of the preceding claims **characterised in that** the winding drum has a cylindrical casing with a spiral profiling (13) at the outside for winding on the line (1) in guided fashion.

12. A winding device according to one of the preceding claims **characterised in that** the inner rotary guide, the winding drum and/or the holding portion at least predominantly comprise plastic parts.

13. A winding device according to one of the preceding claims **characterised in that** at the first end, in particular at the first opening, the winding drum (22A) has a holding tongue (23), on which there is provided a strain-relief means for the line (1).

14. A winding device according to one of the preceding claims including precisely one electrical control signal cable and/or power supply cable (1) which can be wound and unwound, that is guided interruption-free by the inner rotary guide (18) from the fixed point (F) to the rotary point (R).

15. Use of a winding device according to one of claims 1 to 14 for the stowage of a line and for winding a line on and off as required, in particular a line which is ready-made or which is already connected at least at one end and/or a line connected to a portable device, like for example in a factory or workshop.

## Revendications

1. Dispositif d'enroulement (10) pour enrouler et dérouler une conduite flexible (1), comme un câble, un tuyau ou similaire, comprenant un bâti (11) pouvant être monté de manière stationnaire;
un tambour de bobinage cylindrique creux (12), qui est monté sur le bâti de manière à pouvoir tourner autour d'un axe de rotation (A), forme un espace intérieur (12B) et présente un côté extérieur (12A) sur lequel ou duquel une conduite peut être enroulée ou déroulée;
un guide rotatif intérieur (18) pour le guidage sans interruption d'une conduite (1) depuis un point fixe (F) solidaire du bâti jusqu'à un point de rotation (R) qui est solidaire en rotation du tambour d'enroulement (12) et qui peut tourner relativement autour de l'axe de rotation par rapport au point fixe, le guide rotatif définissant entre le point fixe et le point de rotation un tracé de conduite avec deux enroulements (18A, 18B) de sens opposés, avec un premier sens d'enroulement autour de l'axe de rotation (A), un renvoi (18C) pouvant tourner autour de l'axe de rotation, dans lequel renvoi la conduite est rabattue d'un enroulement (18A) dans l'autre enroulement (18B), et avec un deuxième sens d'enroulement, en sens inverse du premier sens d'enroulement;
le guide rotatif intérieur (18) étant logé au moins en majeure partie, de préférence entièrement, dans l'espace intérieur (12B) du tambour de bobinage (12); **caractérisé en ce que** le tambour de bobinage (12) présente à une première extrémité frontale, sur le côté de laquelle est prévu le point de rotation (R) du guide rotatif intérieur (18), un premier évidement (15A) qui débouche frontalement de manière ouverte dans la direction axiale par rapport à l'axe de rotation (A), et **en ce qu'**il est prévu à la deuxième extrémité frontale opposée une pièce de retenue (19B) reliée de manière solidaire en rotation au bâti, pièce de retenue qui présente un deuxième évidement (15B) qui débouche de manière ouverte vers l'extérieur dans un plan radial perpendiculaire à l'axe de rotation (A), de sorte qu'une conduite (1) à enrouler peut être posée de l'extérieur à travers le premier évidement vers le point de rotation (R) du guide rotatif intérieur, dans le guide rotatif intérieur et de son point fixe (F) à travers le deuxième évidement ou vice versa.

2. Dispositif d'enroulement selon la revendication 1, **caractérisé en ce que** le guide rotatif intérieur présente un dispositif de guidage de conduite (18) en forme de bande pour recevoir une conduite et le dispositif de guidage de conduite présente une ou plusieurs premières couches de spirales (18A) dans lesquelles une conduite reçue est enroulée autour de l'axe de rotation dans le premièr sens d'enroulement, une ou plusieurs deuxièmes couches de spirales (18B), dans lesquelles la conduite reçue est enroulé dans le deuxième sens d'enroulement en sens inverse autour de l'axe de rotation, ainsi qu'un coude de renvoi (18C) qui relie les deux couches de spirales et dans lequel la conduite reçue (1) est enroulé.

3. Dispositif d'enroulement selon la revendication 2, **caractérisé en ce que** le dispositif de guidage de conduite (18) est composé de membres individuels qui présentent de préférence chacun sur le côté extérieur radial une fente continue qui peut être élargie afin d'insérer une conduite dans le membre respectif.

4. Dispositif d'enroulement selon la revendication 1, 2 ou 3, **caractérisé en ce que** le guide rotatif intérieur (18) est relié à la pièce de retenue (19B) pour former une unité de guidage, l'unité de guidage et le tambour de bobinage pouvant être détachés l'un de l'autre, l'unité de guidage étant de préférence entièrement logée dans l'espace intérieur du tambour de bobinage.

5. Dispositif de bobinage selon l'une des revendications 1 à 4, **caractérisé en ce que** le tambour de bobinage (12) est réalisé en une seule pièce, en particulier sous la forme d'une enveloppe cylindrique; ou
le tambour de bobinage présente une structure en plusieurs parties constituée d'un certain nombre de pièces individuelles reliées de manière amovible, en particulier une enveloppe cylindrique constituée d'au moins deux parties d'enveloppe pouvant être reliées de manière amovible; ou
le tambour de bobinage (22C) présente une fente d'introduction (24) partant du premier évidement (15A) et s'étendant jusqu'à la deuxième extrémité, en particulier dans le sens axial, pour l'introduction d'une conduite; ou
le tambour de bobinage (12) est monté de manière amovible sur le bâti (11) à la première extrémité frontale au moyen d'une bride d'accouplement (19A).

6. Dispositif de bobinage selon l'une des revendications 1 à 5, notamment selon la revendication 5, **caractérisé en ce qu'**il est prévu sur le bâti (11) un dispositif d'entraînement (16) qui, en position de montage, est couplé à la première extrémité frontale du tambour de bobinage (12), notamment de manière amovible à la bride d'accouplement (19A), de manière à transmettre un couple.

7. Dispositif d'enroulement selon la revendication 6, **caractérisé en ce que** le dispositif d'entraînement est réalisé sous la forme d'un entraînement à ressort (16A) pour l'enroulement automatique, un dispositif automatique d'enroulement (17) avec blocage de retour (17A) étant de préférence associé à l'entraînement à ressort.

8. Dispositif d'enroulement selon l'une des revendications 1 à 7, **caractérisé en ce que** la pièce de retenue est réalisée à la manière d'un disque d'appui (19B) avec une zone d'appui en forme d'anneau circulaire au moins par endroits, sur laquelle la deuxième extrémité frontale du tambour de bobinage (12) est montée en rotation de manière à pouvoir glisser ou rouler, de préférence avec des rouleaux d'appui (19D) sur lesquels un côté intérieur du tambour de bobinage (12) est monté en rotation et/ou la pièce de retenue (19B) forme le point fixe (F) solidaire du bâti du guidage rotatif intérieur.

9. Dispositif de bobinage selon l'une des revendications précédentes, dans lequel le bâti (11) présente deux plaques de retenue (11A, 11B) opposées entre lesquelles les extrémités frontales du tambour de bobinage (12) sont retenues; ou en ce que le bâti présente exactement une plaque de retenue à la première extrémité frontale du tambour de bobinage, la pièce de retenue étant fixée à l'opposé sur un arbre de retenu coaxial à l'axe de rotation (A).

10. Dispositif d'enroulement selon l'une des revendications précédentes, **caractérisé en ce qu'**il est prévu un mécanisme de réglage d'enroulement (14) avec une tête de guidage (14A) réglable parallèlement à l'axe de rotation pour guider une conduite pendant l'enroulement, la tête de guidage étant couplée au mouvement de rotation du tambour de bobinage (12) par l'intermédiaire d'un engrenage, en particulier d'un entraînement à broche (14B), de sorte que le point d'enroulement de la conduite (1) sur le tambour de bobinage est déplacé dans la direction axiale pendant la rotation de celui-ci.

11. Dispositif d'enroulement selon l'une des revendications précédentes, **caractérisé en ce que** le tambour de bobinage présente une enveloppe cylindrique avec un profilage en spirale (13) sur le côté extérieur pour l'enroulement guidé de la conduite (1).

12. Dispositif de bobinage selon l'une des revendications précédentes, **caractérisé en ce que** le guide rotatif intérieur, le tambour de bobinage et/ou la pièce de retenue sont constitués au moins principalement de pièces en matière plastique.

13. Dispositif de bobinage selon l'une des revendications précédentes, **caractérisé en ce que** le tambour de bobinage (22A) présente à la première extrémité frontale, en particulier au niveau du premier évidement, une languette de retenue (23) sur laquelle est prévue une décharge de traction pour la conduite (1).

14. Dispositif d'enroulement selon l'une des revendications précédentes, comprenant exactement un câble électrique de signal de commande et/ou d'alimentation électrique (1) pouvant être enroulé et déroulé, qui est guidé sans interruption par le guide rotatif intérieur (18) du point fixe (F) au point de rotation (R).

15. Utilisation d'un dispositif d'enroulement selon l'une des revendications 1 à 14 pour ranger ainsi que pour enrouler et dérouler à la demande une conduite, en particulier une conduite pré-confectionnée ou déjà raccordée au moins d'un côté et/ou une conduite raccordée à un appareil portable, comme par exemple dans un atelier ou une usine.
